# EUROPÄISCHE PATENTSCHRIFT

(11) **EP 4 367 441 B1**
(45) Veröffentlichungstag und Bekanntmachung des Hinweises auf die Patenterteilung: **30.04.2025**
(21) Anmeldenummer: 22801436.1
(22) Anmeldetag: 12.10.2022
(51) Int. Cl.: F23D 14/02, F23N 1/00, F23N 5/20

(54) **VERFAHREN ZUR MODELLPRÄDIKTIVEN REGELUNG EINES BRENNSTOFF-LUFT-GEMISCHES EINES SYSTEMS SOWIE EIN ZUGEHÖRIGES SYSTEM**
METHOD FOR MODEL-PREDICTIVE CONTROL OF A FUEL-AIR MIXTURE OF A SYSTEM, AND AN ASSOCIATED SYSTEM
PROCÉDÉ DE RÉGULATION PRÉDICTIVE DE MODÈLE D'UN MÉLANGE COMBUSTIBLE-AIR D'UN SYSTÈME ET SYSTÈME ASSOCIÉ

(30) Priorität: 20.10.2021 DE 102021127223
(43) Veröffentlichungstag der Anmeldung: 15.05.2024
(73) Patentinhaber: ebm-papst Landshut GmbH, 84030 Landshut (DE)
(72) Erfinder: KERSCHREITER, Andreas, 84174 Eching (DE); SIMON, Bernhard, 80805 München (DE)
(74) Vertreter: Staeger & Sperling Partnerschaftsgesellschaft mbB
(86) Internationale Anmeldenummer: PCT/EP2022/078352
(87) Internationale Veröffentlichungsnummer: WO 2023/066745

(56) Entgegenhaltungen:
- WO-A1-2011/120689
- WO-A1-2011/120689
- WO-A1-2013/117516
- WO-A1-2013/117516
- WO-A1-99/63273
- WO-A1-99/63273

## Beschreibung

Die Erfindung betrifft ein Verfahren zur modellprädiktiven Regelung eines Brennstoff-Luft-Gemisches eines Systems sowie ein zugehöriges System, bei welchem es sich vorzugsweise um eine Gastherme handelt.

Bei im Stand der Technik bekannten Vorrichtungen zur Regelung eines Brennstoff-Luft-Gemisches in einer Heiztherme, wobei es sich bei als Gasthermen ausgebildeten Heiztermen zumeist um ein Gas-Luft-Gemisch handelt, ist zumeist ein Differenzdrucksensor vorgesehen, welcher die Druckdifferenz bzw. den Differenzdruck zwischen einem Druck an einer Messstelle stromauf einer Hauptmengendrossel der Gastherme und einem (Referenz-) Druck an einem Referenzpunkt ermittelt.

Weiter ist zumeist ein digitaler Regler ausgebildet, ein Stellglied anhand des gemessenen Drucks so einzustellen, dass ein gewünschter Soll-Wert des Drucks möglichst ohne Regelabweichung und ohne ein Überschwingen erreicht bzw. gehalten wird.

Als Stellglied wird beispielsweise ein als Regel- oder Gasventil bezeichenbares Ventil verwendet, dessen Ventilstellung über einen Schrittmotor einstellbar ist, sodass durch den Schrittmotor der Durchfluss durch das Regelventil schrittweise steuerbar ist.

Um den gemessenen Druck als Ist-Wert somit im Bereich des Soll-Werts zu halten, wird im Stand der Technik das Stellglied oftmals schnell hintereinander und über einen langen Zeitraum immer wieder angesteuert, sodass es an dem Stellglied zu einem starken Verschleiß kommen kann. Durch den Verschleiß ist eine entsprechend regelmäßige Wartung und gegebenenfalls ein Austausch des Stellgliedes und/oder der Komponenten des Stellgliedes notwendig.

Weitere Systeme bzw. Gasthermen sowie Verfahren zur Regelung eines Brennstoff-Luft-Gemisches eines Systems sind zudem beispielhaft aus der Schrift WO 99/63273 A1 bekannt, wobei auch die Dokumente WO 2013/117516 A1 und WO 2011/120689 A1 für den technischen Hintergrund der Erfindung relevante Aspekte offenbaren.

Der Erfindung liegt deshalb die Aufgabe zugrunde, die vorgenannten Nachteile zu überwinden und ein Verfahren zur Regelung eines Brennstoff-Luft-Gemisches bereitzustellen, durch welches die Lebensdauer des Stellgliedes erhöht werden kann.

Diese Aufgabe wird durch die Merkmalskombination gemäß Patentanspruch 1 sowie durch die Merkmalskombination gemäß Patentanspruch 8 gelöst.

Erfindungsgemäß wird daher ein Verfahren zur Regelung eines Brennstoff-Luft-Gemisches eines Systems vorgeschlagen, wobei es sich bei diesem System insbesondere um eine Heiztherme und vorzugsweise um eine Gastherme handelt. Das System weist eine Mischeinrichtung zur Mischung eines Brennstoffs mit Luft zu dem Brennstoff-Luft-Gemisch, ein in Strömungsrichtung des Brennstoffs stromauf der Mischeinrichtung angeordnetes, durch eine Stellgröße angesteuertes Stellglied zur Regelung eines Brennstoffmassenstroms des in die Mischeinrichtung strömenden Brennstoffs und einen Differenzdrucksensor zur Erfassung eines Differenzdrucks zwischen einem Druck des Brennstoffs bezogen auf die Strömungsrichtung des Brennstoffs stromauf der Mischeinrichtung und stromab des Stellglieds gegenüber einem Referenzdruck in Strömungsrichtung der Luft stromauf der Mischeinrichtung als Ist-Wert auf. Der Differenzdruck kann auch als Offsetdruck oder Druckdifferenz bezeichnet werden. Ferner umfasst das System vorzugsweise eine Hauptmengendrossel, welche strömungstechnisch zwischen dem Stellglied und der Mischeinrichtung angeordnet ist, wobei durch den Differenzdrucksensor vorzugsweise der Differenzdruck zwischen einem Druck des Brennstoffs stromauf der Hauptmengendrossel und dem Referenzdruck erfasst wird. Der von dem Differenzdrucksensor erfasste Ist-Wert ändert sich Systembedingt bei einer durch eine Änderung der Stellgröße bewirkten Positionsänderung des Stellglieds, welche entsprechend zu einer Änderung des Massenstroms des in die Mischeinrichtung strömenden Brennstoffs führt, nicht unmittelbar, sondern nach einer Totzeit und mit einem Verstärkungsfaktor, welcher von der die Änderung bewirkenden Stellgröße abhängt. Als Positionsänderung wird hierbei insbesondere eine Änderung einer Durchflussstellung bzw. eine Änderung eines Massenstroms durch das Stellglied verstanden. Entsprechend ist das Systemverhalten bei einer Änderung der Stellgröße bzw. bei einer Positionsänderung des Stellgliedes durch die Totzeit und den Verstärkungsfaktor beschreibbar. Gemäß dem erfindungsgemäßen Verfahren ist in einer ersten Verfahrensphase zur Identifikation des Systemverhaltens vorgesehen, dass die Stellgröße zur Ansteuerung des Stellgliedes mit einem Standardregler bestimmt wird, um den Ist-Wert im Mittel einem Soll-Wert anzugleichen. Als Standardregler werden dabei insbesondere lineare Regler und weiter insbesondere P-, I-, PI-, PD- und PID-Regler verstanden. Die Stellgröße und der Ist-Wert können insbesondere während der ersten Verfahrensphase bedingt durch die Totzeit und den Verstärkungsfaktor jeweils mit einer Amplitude und einer Frequenz um den Soll-Wert schwingen. Ein Verlauf des Ist-Werts und ein Verlauf der Stellgröße über die Zeit werden während der ersten Verfahrensphase zur Identifikation des Systemverhaltens erfasst und aus diesen der Verstärkungsfaktor in Abhängigkeit der Stellgröße und die Totzeit bestimmt. Nach der Bestimmung der Totzeit und des Verstärkungsfaktors in der ersten Verfahrensphase wird die Stellgröße in einer zweiten Verfahrensphase zur modellprädiktiven adaptiven Regelung des Systems mit einem insbesondere einen Smith-Prädiktor aufweisenden modellbasierten Regler bestimmt. Der modellbasierte Regler berücksichtigt den zuvor ermittelten Verstärkungsfaktor und die Totzeit, welche bei der Bestimmung der Stellgröße vorzugsweise durch den Smith-Prädiktor einbezogen wird. Dabei ist der modellbasierte Regler ausgebildet, den Ist-Wert derart dem Soll-Wert anzugleichen, dass die Stellgröße in der zweiten Verfahrensphase gegenüber der ersten Verfahrensphase weniger häufig und weniger stark geändert werden muss.

Durch die Identifikation des durch die Totzeit und den Verstärkungsfaktor bestimmten Systemverhaltens in der ersten Verfahrensphase und die Berücksichtigung des Systemverhaltens in der zweiten Verfahrensphase, muss das Stellglied in der zweiten Verfahrensphase entsprechend seltener und bei einer Ansteuerung weniger stark angesteuert werden als in der ersten Verfahrensphase und als bei herkömmlichen bzw. ausschließlich auf Standardreglern basierenden Regelungen, sodass mit dem erfindungsgemäßen Verfahren der Verschleiß des Stellgliedes reduziert wird.

Mit dem vorgeschlagenen Verfahren zur modellprädiktiven Regelung ist eine robuste und zugleich performante Regelung des Differenzdrucks möglich, wobei durch eine entsprechende Berücksichtigung einer Änderung des Systemverhaltens auch von einer adaptiven und selbstlernenden Regelung gesprochen werden kann.

Die Verstärkung des Systems ist von einer Vielzahl von Faktoren abhängig und kann daher nicht oder nur schwer vorhergesagt werden. Die eine Verstärkung beschreibende Übertragungsfunktion des Systems kann beispielsweise durch die Heizleistung der Heiztherme bzw. die Stellung des Schrittmotors bzw. des Ventils, die Gasart, den Gasversorgungsdruck und/oder durch das Regelventil bzw. dessen Ventilkennlinie beeinflusst werden. Dennoch kann die Verstärkung vergleichsweise einfach ermittelt werden, wenn bei einer Änderung der Stellgröße als Eingang der Messwert des Differenzdrucksensors als Ausgang beobachtet wird.

Die Totzeit im System wird insbesondere durch Verzögerungen bei einer Datenverarbeitung des Reglers bzw. auf der Regeleinrichtung und durch Verzögerungen bei einer Datenverarbeitung des Differenzdrucksensors dominiert. Verzögerungen bzw. Totzeiten betreffend strömungsmechanisches Vorgänge sind im Vergleich zu vernachlässigen. Dabei kann die sich so ergebende Totzeit als im Wesentlichen konstant betrachtet werden.

Um zu gewährleisten, dass eine Änderung des Systemverhaltens auch in der zweiten Verfahrensphase erkannt und berücksichtigt wird, ist gemäß einer vorteilhaften Weiterbildung vorgesehen, dass während der zweiten Verfahrensphase eine Abweichung des Ist-Werts von dem Soll-Wert bestimmt wird und bei einem Überschreiten der Abweichung und/oder eines Mittelwertes der Abweichung über einen vorbestimmten Grenzwert die Totzeit und der Verstärkungsfaktor gemäß der ersten Verfahrensphase ermittelt werden.

Ebenfalls um eine Änderung des Systemverhaltens während der zweiten Verfahrensphase erkennen und berücksichtigen zu können, sieht eine weitere Ausgestaltung vor, dass während der zweiten Verfahrensphase ein Verlauf der Stellgröße (über die Zeit) erfasst und eine Anzahl und Höhe von Stellgrößen-Änderungen bestimmt wird. Bei einem Überschreiten der Anzahl und/oder der Höhe der Stellgrößen-Änderungen über einen jeweiligen vorbestimmten Grenzwert werden die Totzeit und der Verstärkungsfaktor gemäß der ersten Verfahrensphase neu ermittelt.

Es kann vorgesehen sein, dass das Verfahren vor einem Wechsel in die zweite Verfahrensphase für eine vorbestimmte Zeit in der ersten Verfahrensphase verbleibt.

Alternativ oder zusätzlich kann auch vorgesehen sein, dass in der ersten Verfahrensphase eine vorbestimmte Stellgrößenänderung gemäß einem vorbestimmten zeitlichen Verlauf erfolgt und/oder das als Heiztherme ausgebildete System eine bestimmte Heizleistungskurve abfährt, um dadurch in vorbestimmter Weise das Systemverhalten bestimmen zu können.

Aus einer Verzögerung zwischen einer Änderung der Stellgröße und einer durch die Änderung der Stellgröße bedingte Änderung des Ist-Werts kann gemäß einer vorteilhaften Weiterbildung die Totzeit bestimmt werden.

Die Verstärkung im System kann mit geringem numerischen Aufwand aus den Signalverläufen (Ist-Wert des Drucks bzw. der Druckdifferenz oder Stellgröße) des schwingenden Reglers in der ersten Verfahrensphase ermittelt werden.

Da die Amplituden dieser Signale für die meisten Systeme vergleichsweise gering sind, kann eine so bestimmte Verstärkung als repräsentativ für das System betrachtet werden.

Vorzugsweise werden/wird der Verstärkungsfaktor und/oder die Totzeit durch einen Wiener-Filter bestimmt. Dabei ist der Wiener-Filter ausgebildet, den Verstärkungsfaktor und/oder die Totzeit durch die Stellgröße und den Ist-Wert zu bestimmen.

Insbesondere bei der Verwendung eines vereinfachten digitalen Wiener-Filters ergibt sich die Verstärkung aus dem Quotienten von Kreuzkorrelation und Auto-Korrelation der Signale über die Zeit. Hierbei ist die Betrachtung über einen Zeitraum von 2 bis 3 Sekunden ausreichend. Aus der Kreuzkorrelation der Daten kann zudem die Totzeit im System bestimmt oder validiert werden.

Der modellbasierte Regler, welcher in der zweiten Verfahrensphase für die Bestimmung der Stellgröße genutzt wird, umfasst vorzugsweise den Smith-Prädiktor und einen Standardregler. Dabei wird die Stellgröße aus einer Überlagerung des Smith-Prädiktors mit dem Standardregler bestimmt, sodass die Totzeit durch den Smith-Prädiktor und der Verstärkungsfaktor durch den Standardregler kompensiert werden.

Ein weiterer Aspekt der Erfindung betrifft ein System, bei welchem es sich insbesondere um eine Gastherme handelt. Das System weist eine Mischeinrichtung zur Mischung eines Brennstoffs mit Luft zu dem Brennstoff-Luft-Gemisch, ein in Strömungsrichtung des Brennstoffs stromauf der Mischeinrichtung angeordnetes, durch eine Stellgröße angesteuertes Stellglied zur Regelung eines Brennstoffmassenstroms des in die Mischeinrichtung strömenden Brennstoffs und einen Differenzdrucksensor zur Erfassung eines Differenzdrucks zwischen einem Druck des Brennstoffs bezogen auf die Strömungsrichtung des Brennstoffs stromauf der Mischeinrichtung und stromab des Stellglieds gegenüber einem Referenzdruck in Strömungsrichtung der Luft stromauf der Mischeinrichtung als Ist-Wert auf. Ferner umfasst das System vorzugsweise eine Hauptmengendrossel, welche strömungstechnisch zwischen dem Stellglied und der Mischeinrichtung angeordnet ist, wobei durch den Differenzdrucksensor vorzugsweise der Differenzdruck zwischen einem Druck des Brennstoffs stromauf der Hauptmengendrossel und dem Referenzdruck erfasst wird. Ferner ist vorgesehen, dass das System eine Regeleinrichtung aufweist, welche signaltechnisch mit dem Stellglied und dem Differenzdrucksensor verbunden sowie ausgebildet ist, ein erfindungsgemäßes Verfahren durchzuführen.

Gemäß einer vorteilhaften Weiterbildung des System ist das Stellglied ein Regelventil mit einem Schrittmotor, durch welchen der Massenstrom durch das Regelventil einstellbar ist. Weiter ist die Stellgröße eine Anzahl von Schritten des Schrittmotors bzw. ein die Anzahl der Schritte des Schrittmotors bestimmender Wert.

Vorzugsweise ist der Soll-Wert ein vorbestimmter Wert und insbesondere 0 Pa.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt. Es zeigt:

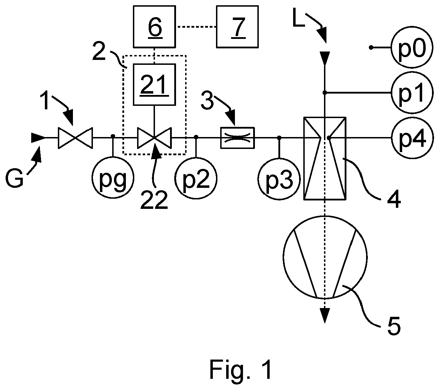

- Fig. 1: eine beispielhafte schematische Darstellung einer Gastherme.

Figur 1 zeigt schematisch einen Teil bzw. einen Ausschnitt einer Gastherme, wobei ein Venturi-Mischer als Mischeinrichtung 4 dargestellt ist, in welchen von einem Gebläse 5 Luft durch einen Lufteinlass L aus der Umgebung mit einem Luftdruck p0 gesaugt wird. In der Mischeinrichtung 4 wird die einströmende Luft und ein durch die Brennstoffzufuhr G einströmender Brennstoff (Gas) zu einem Brennstoff-Luft-Gemisch vermischt.

Der von der Brennstoffzufuhr G einströmende Brennstoff, bei welchem es sich insbesondere um ein Gas handelt, durchströmt dabei ein Sicherheitsventil 1, ein als Regelventil ausgebildetes Stellglied 2 sowie die Hauptmengendrossel 3. Das Sicherheitsventil 1 weist vorzugsweise eine Durchlass- und eine Sperrstellung auf, in welcher der Durchfluss des Brennstoffs durch das Sicherheitsventil 1 gesperrt ist. Das Stellglied 2 ist zur Regelung des Volumen- bzw. Massenstroms des Brennstoffs ausgebildet, sodass der Brennstoffstrom durch das Stellglied 2 zu der Mischeinrichtung 4 einstellbar ist. Durch die Einstellung bzw. Regelung des Stellgliedes 2 ist somit das Mischungsverhältnis des Brennstoff-Luft-Gemisches einstellbar. Hierfür weist das Stellglied 2 ein Ventil 22 auf, dessen Durchflussstellung von einem Schrittmotor 21 änderbar bzw. einstellbar ist, wobei der Schrittmotor 21 von einer Regeleinrichtung 6 mit einer Stellgröße angesteuert wird.

Weiter ist zumindest ein Differenzdrucksensor 7 vorgesehen, welcher ausgebildet ist, den Differenzdruck zwischen dem Druck p2 des Brennstoffs stromauf der Hauptmengendrossel 3 und stromab des Stellgliedes 2 sowie einem Referenzdruck zu bestimmen, wobei es sich bei dem Referenzdruck vorzugsweise um den Umgebungsdruck p0 oder einen Druck p1 der Luft in einer Luft führenden Zuleitung zu der Mischeinrichtung 4 handelt. Hierfür kann der Differenzdrucksensor 7 beispielsweise einen jeweiligen Drucksensor oder Druckaufnehmer zur Erfassung eines jeweiligen Drucks p0, p1, p2 aufweisen. Ferner können weitere Drucksensoren zur Erfassung der weiteren Drücke pg, p3 und p4 vorgesehen sein, welche als Referenzdrucksensoren zur Erfassung eines Referenzdrucks oder zur Plausibilisierung der Drücke p0, p1, p2 dienen können. Der Differenzdrucksensor 7 ist signaltechnisch mit der Regeleinrichtung 6 verbunden.

Das Brennstoff-Luft-Gemisch wird von dem Gebläse 5 zu einem nicht dargestellten Brenner der Gastherme gefördert, wo das Brennstoff-Luft-Gemisch verbrannt wird.

Gemäß dem Verfahren ist in einer ersten Verfahrensphase beispielhaft vorgesehen, dass ein auf der Regeleinrichtung 6 implementierter Regler durch Ansteuerung des Stellgliedes 2 die von dem Differenzdrucksensor 7 ermittelten Differenzdruck zwischen dem Druck p2 des Brennstoffs stromauf der Hauptmengendrossel 3 und einem Referenzdruck p1 als Ist-Wert im Mittel auf einen gewünschten Soll-Wert (insbesondere 0 Pa) regelt. Da das System durch Totzeiten dominiert ist, zeigt der geschlossene Regelkreis, welcher die von dem Regler erzeugte Stellgröße zur Ansteuerung des Schrittmotors 21 als Eingangsgröße und die von dem Differenzdrucksensor 7 ermittelten Differenzdruck als Ausgangsgröße aufweist, ein grenzstabiles Verhalten. Der Differenzdruck als Ist-Wert schwingt also mit einer Amplitude und Frequenz um den Soll-Wert, wobei die mittlere Regelabweichung ungefähr 0 ist. Dieses grenzstabile Verhalten kann genutzt werden um das System bzw. das Systemverhalten zu identifizieren. Das Systemverhalten ist durch die Totzeit und durch eine Verstärkung in Abhängigkeit einer Stellung des Stellgliedes 2 geprägt, welche entsprechend ermittelt werden.

Sobald das System identifiziert, also die Totzeit und die Verstärkung in Abhängigkeit der Stellung des Stellgliedes 2 ermittelt sind, kann die Regelung in einer zweiten Verfahrensphase angepasst werden. Hierfür ist vorgesehen, dass der in der ersten Verfahrensphase verwendete und auf der Regeleinrichtung 6 implementierte Regler um einen Smith-Prädiktor erweitert bzw. der Smith-Prädiktor aktiviert wird. Alternativ kann auch ein weiterer, beispielsweise auf der Regeleinrichtung 6 implementierter Regler aktiviert werden, welcher die Regelung in der zweiten Verfahrensphase übernimmt und ebenfalls einen Smith-Prädiktor umfasst.

In der zweiten Verfahrensphase erfolgt die Regelung des Stellgliedes 2 bzw. die Ermittlung der Stellgröße durch eine Überlagerung eines Standardreglers (wie z.B. PI oder PID) und dem Smith-Prädiktor, wobei die Totzeit durch den Smith-Prädiktor und der Verstärkungsfaktor durch den Standardregler kompensiert werden. Ein einen Standardregler und einen Smith-Prädiktor überlagernder Regler kann auch als Smith-Regler und/oder als modellprädiktive Regelung bezeichnet werden.

Durch die Berücksichtigung der Verstärkung und der Totzeit kann ein Schwingen des Ist-Werts um den Soll-Wert minimiert werden, sodass das Stellglied 2 entsprechend weniger oft und weniger stark angesteuert werden muss.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Verfahren zur Regelung eines Brennstoff-Luft-Gemisches eines Systems, bei welchem es sich insbesondere um eine Gastherme handelt,
wobei das System eine Mischeinrichtung (4) zur Mischung eines Brennstoffs mit Luft zu dem Brennstoff-Luft-Gemisch, ein in Strömungsrichtung des Brennstoffs stromauf der Mischeinrichtung (4) angeordnetes und durch eine Stellgröße angesteuertes Stellglied (2) zur Regelung eines Brennstoffmassenstroms sowie einen Differenzdrucksensor (7) zur Erfassung eines Differenzdrucks zwischen einem Druck p2 des Brennstoffs stromauf der Mischeinrichtung (4) und stromab des Stellglieds (2) gegenüber einem Referenzdruck in Strömungsrichtung der Luft stromauf der Mischeinrichtung (4) als Ist-Wert aufweist,
wobei sich der von dem Differenzdrucksensor (7) erfasste Ist-Wert bei einer Positionsänderung des Stellglieds (2) nach einer Totzeit und mit einem Verstärkungsfaktor ändert, welcher von der die Änderung bewirkenden Stellgröße abhängt, sodass das Systemverhalten durch die Totzeit und den Verstärkungsfaktor beschreibbar ist,
**dadurch gekennzeichnet, dass** die Stellgröße zur Ansteuerung des Stellgliedes (2) in einer ersten Verfahrensphase zur Identifikation des Systemverhaltens mit einem Standardregler bestimmt wird, um den Ist-Wert im Mittel einem Soll-Wert anzugleichen,
wobei die Stellgröße und der Ist-Wert durch die Totzeit und den Verstärkungsfaktor jeweils mit einer Amplitude und einer Frequenz um den Soll-Wert schwingen können,
wobei ein Verlauf des Ist-Werts und ein Verlauf der Stellgröße während der ersten Verfahrensphase zur Identifikation des Systemverhaltens erfasst und aus diesen der Verstärkungsfaktor in Abhängigkeit der Stellgröße und die Totzeit bestimmt werden,
wobei die Stellgröße nach der Bestimmung der Totzeit und des Verstärkungsfaktors in einer zweiten Verfahrensphase zur modellprädiktiven adaptiven Regelung des Systems mit einem insbesondere einen Smith-Prädiktor aufweisenden modellbasierten Regler bestimmt wird, welcher den Verstärkungsfaktor und die Totzeit berücksichtigt, um den Ist-Wert dem Soll-Wert anzugleichen, sodass die Stellgröße in der zweiten Verfahrensphase gegenüber der ersten Verfahrensphase weniger häufig und weniger stark geändert werden muss.

2. Verfahren nach Anspruch 1,
wobei während der zweiten Verfahrensphase eine Abweichung des Ist-Werts von dem Soll-Wert bestimmt wird und
wobei bei einem Überschreiten der Abweichung und/oder eines Mittelwertes der Abweichung über einen vorbestimmten Grenzwert die Totzeit und der Verstärkungsfaktor gemäß der ersten Verfahrensphase ermittelt werden.

3. Verfahren nach Anspruch 1 oder 2,
wobei während der zweiten Verfahrensphase ein Verlauf der Stellgröße erfasst und eine Anzahl und Höhe von Stellgrößen-Änderungen bestimmt wird und
wobei bei einem Überschreiten der Anzahl und/oder der Höhe der Stellgrößen-Änderungen über einen jeweiligen vorbestimmten Grenzwert die Totzeit und der Verstärkungsfaktor gemäß der ersten Verfahrensphase ermittelt werden.

4. Verfahren nach einem der vorhergehenden Ansprüche,
wobei das Verfahren vor einem Wechsel in die zweite Verfahrensphase für eine vorbestimmte Zeit in der ersten Verfahrensphase verbleibt.

5. Verfahren nach einem der vorhergehenden Ansprüche,
wobei aus einer Verzögerung zwischen einer Änderung der Stellgröße und einer durch die Änderung der Stellgröße bedingte Änderung des Ist-Werts die Totzeit bestimmt wird.

6. Verfahren nach einem der vorhergehenden Ansprüche,
wobei der Verstärkungsfaktor und/oder die Totzeit durch einen Wiener-Filter bestimmt werden/wird,
wobei der Wiener-Filter ausgebildet ist, den Verstärkungsfaktor und/oder die Totzeit durch die Stellgröße und den Ist-Wert zu bestimmen.

7. Verfahren nach einem der vorhergehenden Ansprüche,
wobei der modellbasierte Regler den Smith-Prädiktor und einen Standardregler umfasst und
wobei die Stellgröße aus einer Überlagerung des Smith-Prädiktors mit dem Standardregler bestimmt wird, sodass die Totzeit durch den Smith-Prädiktor und der Verstärkungsfaktor durch den Standardregler kompensiert werden.

8. System insbesondere Gastherme,
wobei das System eine Mischeinrichtung (4) zur Mischung eines Brennstoffs mit Luft zu dem Brennstoff-Luft-Gemisch, ein in Strömungsrichtung des Brennstoffs stromauf der Mischeinrichtung (4) angeordnetes und durch eine Stellgröße angesteuertes Stellglied (2) zur Regelung eines Brennstoffmassenstroms sowie einen Differenzdrucksensor (7) zur Erfassung eines Differenzdrucks zwischen einem Druck p2 des Brennstoffs stromauf der Mischeinrichtung (4) und stromab des Stellglieds (2) gegenüber einem Referenzdruck in Strömungsrichtung der Luft stromauf der Mischeinrichtung (4) als Ist-Wert aufweist,
und wobei das System ferner eine Regeleinrichtung (21) aufweist, welche signaltechnisch mit dem Stellglied und dem Differenzdrucksensor (7) verbunden ist,
**dadurch gekennzeichnet, dass** die Regeleinrichtung (21) ausgebildet ist, ein Verfahren gemäß einem der vorhergehenden Ansprüche durchzuführen.

9. System nach Anspruch 8,
wobei das Stellglied (2) ein Regelventil mit einem Schrittmotor (21) ist, durch welchen der Massenstrom durch das Regelventil einstellbar ist, und
wobei die Stellgröße eine Anzahl von Schritten des Schrittmotors (21) ist.

10. System nach Anspruch 8 oder 9,
wobei der Soll-Wert ein vorbestimmter Wert, insbesondere 0 Pa ist.

## Claims

1. A method for control of a fuel-air mixture of a system, which in particular is a gas heater,
wherein the system has a mixing device (4) for mixing a fuel with air in order to form the fuel-air mixture, an actuator (2) arranged in the flow direction of the fuel upstream of the mixing device (4) and driven by a control variable for control of a fuel mass flow and a differential pressure sensor (7) for detecting a differential pressure between a pressure p2 of the fuel upstream of the mixing device (4) and downstream of the actuator (2) with regard to a reference pressure in the flow direction of the air upstream of the mixing device (4) as an actual value,
wherein the actual value detected by the differential pressure sensor (7) changes with a change in position of the actuator (2) after a dead time and with a gain factor which depends on the control variable causing the change so that the system behaviour can be described by the dead time and the gain factor,
**characterised in that** the control variable is determined by driving the actuator (2) in a first method phase for identification of the system behaviour with a standard controller in order to align the mean actual value to a target value,
wherein the control variable and the actual value can each swing about the target value by the dead time and the gain factor with an amplitude and a frequency,
wherein a course of the actual value and a course of the control variable are detected during the first method phase for identification of the system behaviour and the gain factor as a function of the control variable and the dead time are determined therefrom,
wherein the control variable, after the dead time and the gain factor have been determined, in a second method phase for model-predictive adaptive control of the system is determined with a model-based controller in particular having a Smith predictor, which takes into account the gain factor and the dead time, in order to align the actual value to the target value so that the control variable has to be changed less often and less severely in the second method phase compared to the first method phase.

2. The method according to claim 1,
wherein a deviation of the actual value from the target value is determined during the second method phase, and
wherein, if the deviation and/or a mean value of the deviation exceeds a predetermined limit value, the dead time and the gain factor are identified according to the first method phase.

3. The method according to claim 1 or 2,
wherein a course of the control variable is detected and a number and height of changes of the control variable are determined during the second method phase, and
wherein, if the number and/or the height of the changes of the control variable exceed a respective predetermined limit value, the dead time and the gain factor are identified according to the first method phase.

4. The method according to any one of the preceding claims,
wherein the method remains in the first method phase for a predetermined time before a switch to the second method phase.

5. The method according to any one of the preceding claims,
wherein the dead time is determined from a delay between a change of the control variable and a change of the actual value caused by the change of the control variable.

6. The method according to any one of the preceding claims,
wherein the gain factor and/or the dead time is/are determined by a Wiener filter,
wherein the Wiener filter is formed to determine the gain factor and/or the dead time by the control variable and the actual value.

7. The method according to any one of the preceding claims,
wherein the model-based controller comprises the Smith predictor and a standard controller, and
wherein the control variable is determined from an overlap of the Smith predictor with the standard controller so that the dead time is compensated by the Smith predictor and the gain factor is compensated by the standard controller.

8. A system, in particular a gas heater,
wherein the system has a mixing device (4) for mixing a fuel with air in order to form the fuel-air mixture, an actuator (2) arranged in the flow direction of the fuel upstream of the mixing device (4) and driven by a control variable for control of a fuel mass flow and a differential pressure sensor (7) for detecting a differential pressure between a pressure p2 of the fuel upstream of the mixing device (4) and downstream of the actuator (2) with regard to a reference pressure in the flow direction of the air upstream of the mixing device (4) as an actual value,
and wherein the system further has a control device (21) which is connected to the actuator and the differential pressure sensor (7) in a technically signal-secure manner,
**characterised in that** the control device (21) is formed to perform a method according to any one of the preceding claims.

9. The system according to claim 8,
wherein the actuator (2) is a control valve with a stepper motor (21) by which the mass flow can be adjusted by the control valve, and
wherein the control variable is a number of steps of the stepper motor (21).

10. The system according to claim 8 or 9,
wherein the target value is a predetermined value, in particular 0 Pa.

## Revendications

1. Procédé de commande d'un mélange combustible-air d'un système, qui est notamment une chaudière à gaz,
dans lequel le système comprend un dispositif de mélange (4) pour mélanger un combustible avec de l'air pour former le mélange combustible-air, un actionneur (2) disposé en amont du dispositif de mélange (4) dans le sens d'écoulement du combustible et commandé par une variable manipulée pour réguler un débit massique de combustible, et un capteur de pression différentielle (7) pour détecter une pression différentielle entre une pression p2 du combustible en amont du dispositif de mélange (4) et en aval de l'actionneur (2) comparée à une pression de référence dans le sens d'écoulement de l'air en amont du dispositif de mélange (4) comme valeur réelle,
dans lequel la valeur réelle détectée par le capteur de pression différentielle (7) change lors d'un changement de la position de l'actionneur (2) après un temps mort et avec un facteur de gain qui dépend de la variable manipulée provoquant le changement, de sorte que le comportement du système peut être décrit par le temps mort et le facteur de gain,
**caractérisé en ce que** la variable manipulée pour commander l'actionneur (2) est déterminée dans une première phase de procédé pour identifier le comportement du système avec un régulateur standard afin d'ajuster la valeur réelle en moyenne à une valeur cible,
dans lequel la variable manipulée et la valeur réelle peuvent chacune osciller autour de la valeur de consigne avec une amplitude et une fréquence dues au temps mort et au facteur de gain,
dans lequel une courbe de la valeur réelle et une courbe de la variable manipulée sont enregistrées pendant la première phase de procédé pour identifier le comportement du système et à partir de celles-ci le facteur de gain est déterminé en fonction de la variable manipulée et du temps mort,
dans lequel la variable manipulée est déterminée après la détermination du temps mort et du facteur de gain dans une deuxième phase de procédé pour une commande adaptative prédictive du modèle du système avec un régulateur basé sur un modèle, en particulier doté d'un prédicteur de Smith, qui prend en compte le facteur de gain et le temps mort afin d'ajuster la valeur réelle à la valeur cible, de sorte que la variable manipulée doit être modifiée moins fréquemment et dans une moindre mesure dans la deuxième phase de procédé que dans la première phase de procédé.

2. Procédé selon la revendication 1,
dans lequel au cours de la deuxième phase de procédé, un écart entre la valeur réelle et la valeur cible est déterminé et
dans lequel si l'écart et/ou une valeur moyenne de l'écart dépasse une valeur limite prédéterminée, le temps mort et le facteur de gain sont déterminés selon la première phase de procédé.

3. Procédé selon la revendication 1 ou 2,
dans lequel au cours de la deuxième phase de procédé, l'évolution de la variable manipulée est enregistrée et le nombre et l'amplitude des variations de la variable manipulée sont déterminés et
dans lequel si le nombre et/ou l'amplitude des variations de la variable manipulée dépassent une valeur limite prédéterminée respective, le temps mort et le facteur de gain sont déterminés selon la première phase de procédé.

4. Procédé selon l'une quelconque des revendications précédentes,
dans lequel le procédé reste dans la première phase de procédé pendant une durée prédéterminée avant de passer à la deuxième phase de procédé.

5. Procédé selon l'une quelconque des revendications précédentes,
dans lequel le temps mort est déterminé à partir d'un délai entre une variation de la variable manipulée et une variation de la valeur réelle causé par la variation de la variable manipulée.

6. Procédé selon l'une quelconque des revendications précédentes,
dans lequel le facteur de gain et/ou le temps mort sont déterminés par un filtre de Wiener,
dans lequel le filtre de Wiener est conçu pour déterminer le facteur de gain et/ou le temps mort à l'aide de la variable manipulée et la valeur réelle.

7. Procédé selon l'une quelconque des revendications précédentes,
dans lequel le contrôleur basé sur un modèle comprend le prédicteur de Smith et un contrôleur standard et
dans lequel la variable manipulée est déterminée à partir d'une superposition du prédicteur de Smith avec le contrôleur standard, de sorte que le temps mort est compensé par le prédicteur de Smith et le facteur de gain par le contrôleur standard.

8. Système notamment chaudière à gaz,
dans lequel le système comprend un dispositif de mélange (4) pour mélanger un combustible avec de l'air pour former le mélange combustible-air, un actionneur (2) disposé en amont du dispositif de mélange (4) dans le sens d'écoulement du combustible et commandé par une variable manipulée pour réguler un débit massique de combustible, et un capteur de pression différentielle (7) pour détecter une pression différentielle entre une pression p2 du combustible en amont du dispositif de mélange (4) et en aval de l'actionneur (2) comparée à une pression de référence dans le sens d'écoulement de l'air en amont du dispositif de mélange (4) comme valeur réelle,
et dans lequel le système comprend en outre un dispositif de commande (21) qui est connecté par signal à l'actionneur et au capteur de pression différentielle (7),
**caractérisé en ce que** le dispositif de commande (21) est conçu pour mettre en œuvre un procédé selon l'une des revendications précédentes.

9. Système selon la revendication 8,
dans lequel l'actionneur (2) est une vanne de régulation avec un moteur pas à pas (21) au moyen duquel le débit massique à travers la vanne de régulation peut être ajusté, et
dans lequel la variable manipulée est un nombre de pas du moteur pas à pas (21).

10. Système selon la revendication 8 ou 9,
dans laquelle la valeur cible est une valeur prédéterminée, en particulier 0 Pa.
